# EUROPEAN PATENT APPLICATION

(11) **EP 2 388 893 A1**
(43) Date of publication of application: **23.11.2011**
(21) Application number: 10163318.8
(22) Date of filing: 19.05.2010
(51) Int. Cl.: H02K 3/14, H02K 3/28, H02K 7/18

(54) **Generator with single turn wave winding and wind turbine**

(71) Applicant: Siemens Aktiengesellschaft, 80333 München (DE)
(72) Inventor: Groendahl, Erik, 8653, Them (DK); Kimiabeigi, Mohammad, 7330, Brande (DK); Stiesdal, Henrik, 5000, Odense C (DK)

(57) **Abstract**

A generator (76) comprising at least one pole set representing one phase is disclosed. Each pole set comprises a number of poles (4). At least one conductor (8) is turned about the poles (4) of the particular pole set such that only half a single turn (8a, 8b, 8c, 8d) is associated to each pole (4a, 4b, 4c, 4d).

## Description

The present invention relates to a generator and to a wind turbine.

Based on today's technology in direct drive generators, each coil is composed of more than one series turn while a chosen number of coils may also be connected in series. The two aforementioned selectable numbers, i.e. the number of series in turn and the number of coils connected in series, may be chosen to obtain the terminal voltage of the generator which itself may have already been chosen based on power electronics/grid requirements. In the described conventional type of winding, the series turns in each slot need to be electrically insulated from each other by a so called turn-turn insulation due to the voltage difference between the turns in series.

The aforementioned turn-turn insulation used in the slot of the machines with conventional multi-turn windings, results in different disadvantages: Poor heat transfer coefficient of the insulation makes it very difficult for the main source of heat in the generator, i.e. the windings, to get cooled down through the neighbouring laminations. Using the required insulation in the slots decreases the slot space for the active material, which is usually copper, and thereby the so called fill factor. This in turn reduces the out put torque for the same current density or decreases the efficiency for the same torque. A typical value of fill factor for conventional type of winding is in the range of 70-80%.

Therefore, it is a first objective of the present invention to provide a generator, where the slot fill factor is increased. It is a second objective of the present invention to provide an advantageous wind turbine.

The first objective is solved by a generator as claimed in claim 1. The second objective is solved by a wind turbine as claimed in claim 12. The depending claims define further developments of the invention.

The inventive generator comprises at least one pole set. One pole set represents one phase. Each pole set comprises a number of poles. At least one conductor is turned about the poles of the particular pole set such that only half a single turn is associated to each pole. Preferably, a number of conductors which are connected in parallel are turned about the poles such that only half a single turn of each conductor is associated to each pole.

Compared with a conventional coil composed of more than one series turn, the insulation between the conductors placed together in a slot of the inventive generator can significantly be reduced. Preferably, the turn-turn insulation, i.e. the insulation between series turns in a slot, is removed or only a thin insulation between parallel conductors is present. This improves the slot fill factor resulting in higher torque or efficiency. Moreover, the inventive generator provides the possibility for a better cooling of, for example, a permanent magnet generator. The inventive generator may, for example, be used in direct drive wind turbine applications.

In the inventive generator single turn wave winding replaces the conventional windings. The idea is, that each phase in, for example, a three phase or multi phase generator has a single Go or Return path in each pole. In the frame work of the present invention a single Go or Return path is also designated as half a single turn. The Go and Return paths or half a single turns may form a wave configuration. For example, a single Go path may itself be composed of a number of parallel conductors. The parallel conductors return in the next pole and continue this way of distribution along the hole circumference of, for example, the stator of the generator. This gives the advantage of having less insulation in the slot. Thereby, a better cooling of the windings can be achieved and a higher slot fill factor can be realised.

The generator may comprise a number of slots. Advantageously, between 5 and 25, preferably between 10 and 20, conductors may be connected in parallel in each slot, for instance in each stator slot. Assuming that the same slot dimension as for conventional multi-turn windings is used for the wave winding, 10 to 20 parallel conductors or in that range will form the winding in order to reduce the proximity and skin effect losses. The optimal number of parallel conductors to give a low value of proximity and skin effect loss can be chosen analytically or can be obtained by a simulation or can be obtained experimentally.

The conductors can be transposed from one pole to another pole. This improves the elimination of extra AC losses, for example losses due to the proximity and skin effect. The conductors can be partially or fully transposed in each or every second and winding. Advantageously, the conductors may be transposed at every neighbouring pole or at every second neighbouring pole of the particular pole set. Preferably, the number of poles in a pole set may be an integer multiple of the number of the conductors connected in parallel. To have completely balance out the extra AC loss a full transposition may be used, i.e. to transpose every parallel conductor at every pole while choosing the number of poles to be in integer multiple of the number of parallel conductors in the slots. Having a different number of poles than what is mentioned will still be an option, but with some extend higher relative AC loss due to proximity effect.

The inventive generator may comprise an even number of poles per pole set. In a preferred embodiment of the invention such as for a generator for a direct drive wind turbine the number of poles is equal to or above 100. For example, the generator may comprise at least 3 pole sets. Furthermore, the generator may be a direct drive generator. Generally, the generator may comprise a stator and a rotor. The stator may comprise the at least one pole set. Alternatively or additionally the rotor may comprise the at least one pole set.

In the proposed type of single turn winding, the number of poles may be equal to the sum of Go and Return paths of each phase winding. This means, that the number of poles may be equal to the sum of the half a single turns.

The inventive wind turbine comprises an inventive generator as previously described. The inventive wind turbine has the same advantages as the inventive generator.

In the present invention, the series turns in the slot are replaced by effectively half a single turn which needs much less thinner insulation. This is caused by a less voltage difference between the series turns in one slot in the inventive generator. Taking the advantage of having less insulation for conductors and all the following improvement of the generator performance, some draw backs like high extra AC loss due to proximity and skin effect are reduced by transposing the conductors in an efficient way.

Further features, properties and advantages of the present invention will become clear from the following description of an embodiment in conjunction with the accompanying drawings. All mentioned features and properties are advantageous alone or in any combination with each other.
- Figure 1: schematically shows a wind turbine.
- Figure 2: schematically shows a comparative illustration of multi-turn and single turn wave windings for one phase and four poles.
- Figure 3: schematically shows part of a single turn wave windings of the lower part of figure 2 in a perspective view.
- Figure 4: schematically shows the AC loss factor dependency for single turn winding of the number of parallel, fully transposed conductors.
- Figure 5: schematically shows an arrangement of fully transposed 5 parallel conductors belonging to one phase.
- Figure 6: schematically shows the insulation between parallel conductors associated to a pole.

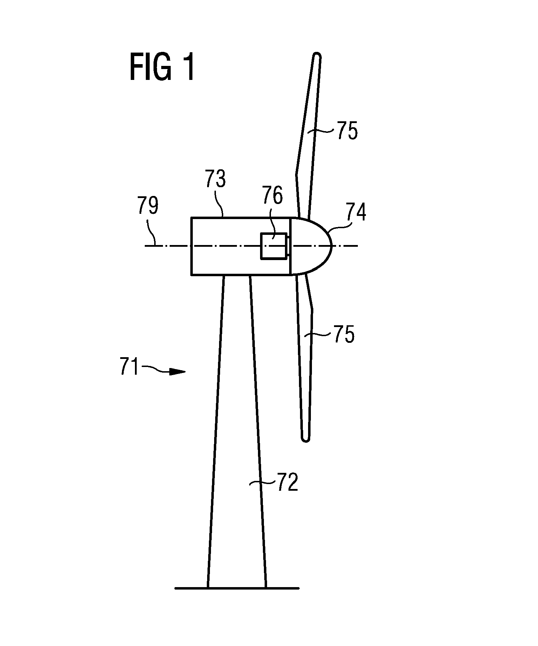

An embodiment of the present invention will now be described with reference to Figures 1 to 6.

Figure 1 schematically shows a wind turbine 71. The wind turbine 71 comprises a tower 72, a nacelle 73 and a hub 74. The nacelle 73 is located on top of the tower 72. The hub 74 comprises a number of wind turbine blades 75. The hub 74 is mounted to the nacelle 73. Moreover, the hub 74 is pivot-mounted such that it is able to rotate about a rotation axis 79. A generator 76 is located inside the nacelle 73. The wind turbine 71 is a direct drive wind turbine.

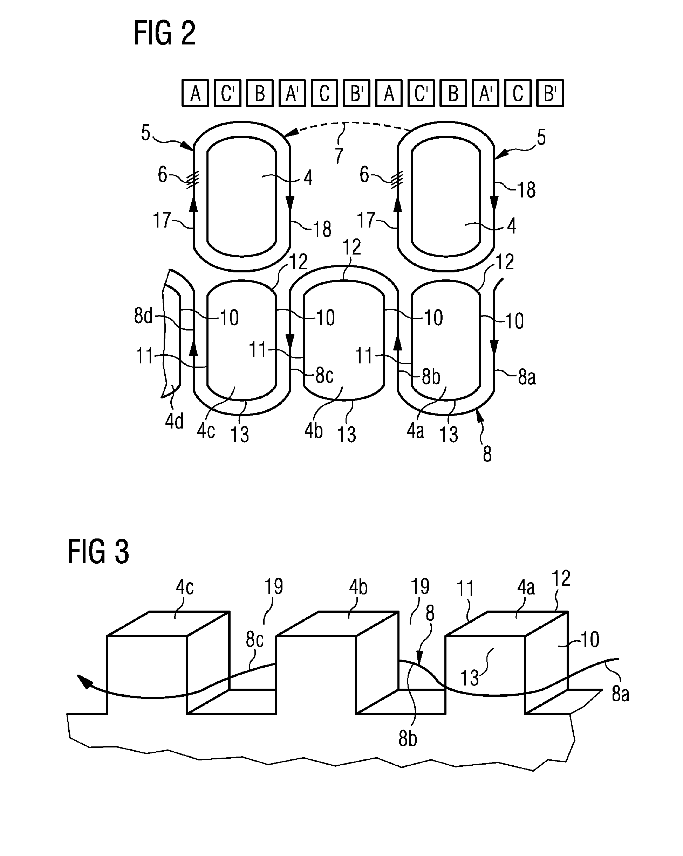

Figure 2 schematically shows a comparative illustration of multi-turn and single turn wave windings for one phase and four poles. The upper part of Figure 2 shows the distributed winding with slots per pole and phase equal to 1 for a 3-phase machine, phases A, B and C. A, B and C correspond to Go direction of the phases and A', B' and C' correspond to Return direction, i.e. opposite direction, of the phases.

In the middle part of Figure 2 two poles 4 representing the first phase are shown. Each of the poles 4 comprises a number of conductor windings 5 with multiple-turns per pole 4. The strokes 6 indicate the more than one series turns. The conductors 5 are connected in series. This is indicated by the dashed line 7. Due to the series turns each of the poles 4 or coils comprises a number of Go paths 17 and a number of Return paths 18.

The lower part of Figure 2 schematically shows the inventive single turn wave windings for one phase of an inventive generator. The pole set belonging to the first phase A comprises a number of poles 4, from which four poles 4a, 4b, 4c and 4d are shown. Generally, the poles 4 may comprise a lamination.

Each pole 4 comprises a right side 10, a left side 11, a front side 12 and a back side 13. A conductor 8 is wave-like turned about the poles 4. The conductor 8 comprises a first half turn 8a, a second half turn 8b, a third half turn 8c and a fourth half turn 8d. The first half turn 8a represents a Return path A', the second half turn 8b represents a Go path A, the third half turn 8c represents a Return path A' and the fourth half turn 8d represents a Go path A.

The first half turn 8a proceeds along the right side 10 of the first pole 4a and proceeds further along the back side 13 of the first pole 4a. Then it proceeds further along the left side 11 of the first pole 4a and at the same time along the right side 11 of the second pole 4b. This means, that the conductor passes a slot between the first pole 4a and the second pole 4b. Then the conductor 8 further proceeds along the front side 11 of the second pole 4b, then along the left side 11 of the second pole 4b and at the same time along the right side 10 of the third pole 4c. The conductor 8 further proceeds along the back side 13 of the third pole 4c and along the left side of the third pole 4c and at the same time along the right side 10 of the fourth pole 4d.

In this wave-like configuration the first half a turn 8a is associated to the first pole 4a, the second half a turn 8b is associated to the second pole 4b, the third half a turn 8c is associated to the third pole 4c and the fourth half a turn 8d is associated to the fourth pole 4d. Figure 3 schematically shows part of the single turn wave windings of the lower part of Figure 2 in a perspective view. The poles 4 are separated from each other by slots 19.

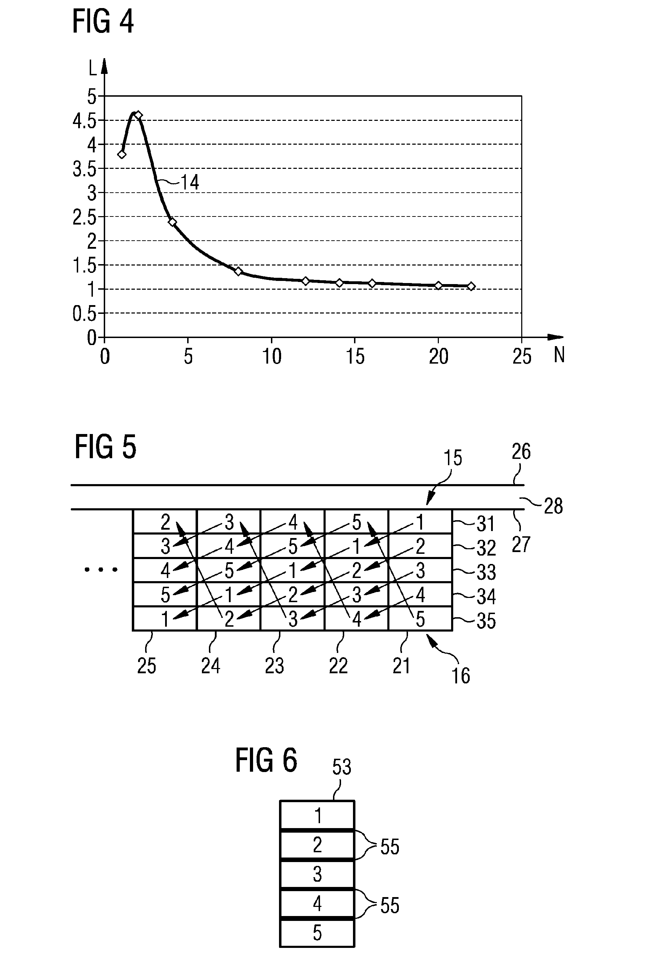

A number of conductors 8 are connected in parallel and are turned about the poles in such a way that only half a single turn of each conductor is associated to each pole, as shown in the lower part in Figure 2 and in Figure 3. The optimal number of parallel conductors to give a low value of proximity and skin effect loss can be chosen analytically or experimentally or by simulation. An example is shown in Figure 4.

Figure 4 schematically shows the AC loss factor for single turn windings versus the number of parallel conductors which are always assumed to be fully transposed. The x-axis represents the number N of parallel and fully transposed conductors. The y-axis represents the AC loss factor L for a single turn winding in arbitrary units. The AC loss factor is caused by proximity and skin effect losses. The obtained curved 14 in Figure 4 shows a maximum AC loss factor for about two parallel conductors. With a further increasing number of parallel conductors the AC loss factor decreases nearly exponentially. For eight and more parallel conductors the AC loss factor L decreases only minimally. The curve 14 shows for ten and more parallel conductors a nearly straight line which is nearly parallel to the x-axis. This means, that the optimal number of parallel conductors to give a low value of proximity and skin effect loss is ten and more.

Figure 5 schematically shows an arrangement of fully transposed 5 parallel conductors belonging to one phase. In the shown arrangement the first pole 21 is followed by a second pole 22, followed by a third pole 23, followed by a fourth pole 24, which is followed by a fifth pole 25 and so forth. Each of the poles 21, 22, 23, 24 and 25 comprises an upper side 15 and a bottom side 16. The different conductors are designated by numbers 1 to 5. Each pole 21, 22, 23, 24 and 25 comprises five positions, a first position 31, a second position 32, a third position 33, a fourth position 34 and a fifth position 35, which follow each other from the upper side 15 to the bottom side 16.

In the first pole 21 the first conductor 1 is located at the first position 31, the second conductor 2 is located at the second position 32, the third conductor 3 is located at the third position 33, the fourth conductor 4 is located at the forth position 34 and the fifth conductor 5 is located at the fifth position 35.

In the second pole 22 the next half a turn of the first conductor 1 changes to the second position 32, the next half a turn of the second conductor 2 changes to the third position, the next half a turn of the third conductor 3 changes to the fourth position 34 and the next half a turn of the fourth conductor 4 changes to the fifth position 35. The next half a turn of the fifth conductor 5 changes from the fifth position 35 in the first pole 21 to the first position 31 in the second pole 22. This pattern is continued for the next poles as shown in Figure 5. By arranging the conductors as shown in Figure 5 the 5 parallel conductors are completely transposed.

In the present embodiment the generator comprises three phases, which means that it comprises three pole sets. Each pole set comprises ten poles. The pattern which is shown in Figure 5 is cyclically repeated for the other 5 poles which are not shown in Figure 5. Generally, the generator comprises a rotor 26, a stator 27 and an airgap 28 between the rotor 26 and the stator 27. The stator 27 comprises the poles shown in Figure 5. Alternatively, the rotor 26 may comprise the poles shown in Figure 5.

Figure 6 schematically shows as an example the insulation between the parallel conductors 55 of a pole 53. The conductors are numbered from 1 to 5. They are connected in parallel, as previously described. Because of the connection in parallel and the parallel assembly none or only very thin conductor insulation 55 is necessary between the different conductors.

Generally, the generator 76 can comprise an inner stator, which means that the stator is located radially inside of the rotor of the generator related to the rotation axis 79 of the rotor. Alternatively, the generator can comprise an outer stator, which means that the stator is located radially outside of the rotor of the generator related to the rotation axis 79 of the rotor. In both cases the rotor and/or the stator can comprise the described single turn wave winding.

Based on the described transposed single turn wave winding configuration, it is theoretically clear that the parallel conductors in the slot may need no insulation or only some varnish as there is none or very small voltage difference between these parallel conductors.

Furthermore, using the described single turn wave-like winding the manufacturing of the coils and the winding process becomes significantly easier and less costly than for conventional multi-turn windings.

## Claims

1. A generator (76) comprising at least one pole set representing one phase (1, 2, 3), each pole set comprising a number of poles (4),
**characterised in that**
at least one conductor (8) is turned about the poles (4) of the particular pole set such that only half a single turn (8a, 8b, 8c, 8d) is associated to each pole (4a, 4b, 4c, 4d).

2. The generator (76) as claimed in claim 1,
**characterised in that**
a number of conductors (8) which are connected in parallel are turned about the poles (4) such that only half a single turn (8a, 8b, 8c, 8d) of each conductor (8) is associated to each pole (4a, 4b, 4c, 4d).

3. The generator (76) as claimed in claim 1 or 2,
**characterised in that**
the generator comprises a number of slots and between 5 and 25 conductors (8) are connected in parallel in each slot.

4. The generator (76) as claimed in claim 3,
**characterised in that**
between 10 and 20 conductors (8) are connected in parallel.

5. The generator (76) as claimed in any of the claims 1 to 4,
**characterised in that**
the conductors (8) are transposed from one pole (4a, 4b, 4c, 4d) to another pole (4a, 4b, 4c, 4d).

6. The generator (76) as claimed in claim 5,
**characterised in that**
the conductors (8) are transposed at every neighbouring pole (4) or at every second neighbouring pole (4) of the particular pole set.

7. The generator (76) as claimed in any of the claims 2 to 6,
**characterised in that**
the generator comprises a number of slots and the number of poles (4) in a pole set is an integer multiple of the number of the conductors (8) connected in parallel in the slots.

8. The generator (76) as claimed in any of the claims 1 to 7,
**characterised in that**
the generator (76) comprises an even number of poles (4) per pole set.

9. The generator (76) as claimed in any of the claims 1 to 8,
**characterised in that**
the generator (76) comprises at least 3 pole sets.

10. The generator (76) as claimed in any of the claims 1 to 9,
**characterised in that**
the generator (76) is a direct drive generator.

11. The generator (76) as claimed in any of the claims 1 to 10,
**characterised in that**
the generator (76) comprises a stator which comprises the at least one pole set.

12. A wind turbine (71) comprising a generator (76) as claimed in any of the claims 1 to 11.
